# EUROPÄISCHE PATENTSCHRIFT

(11) **EP 3 159 138 B1**
(45) Veröffentlichungstag und Bekanntmachung des Hinweises auf die Patenterteilung: **06.06.2018**
(21) Anmeldenummer: 15191096.5
(22) Anmeldetag: 22.10.2015
(51) Int. Cl.: B29C 55/00, B29C 55/06, B29C 47/00, B29C 47/76, B29C 47/88, B65D 63/10, C08J 5/18, C08L 71/00, C08L 67/00, C08L 67/02, B29K 67/00, B29K 77/00, B29K 23/00

(54) **VERFAHREN ZUR HERSTELLUNG EINES KUNSTSTOFF-UMREIFUNGSBANDES**
METHOD OF MANUFACTURING A PLASTIC STRAPPING BAND
PROCÉDÉ DE FABRICATION D'UNE BANDE DE CERCLAGE EN PLASTIQUE

(43) Veröffentlichungstag der Anmeldung: 26.04.2017
(73) Patentinhaber: TITAN Umreifungstechnik GmbH & Co.KG, 58332 Schwelm (DE)
(72) Erfinder: Lenzen, Peter Wilhelm, 45549 Sprockhövel (DE)
(74) Vertreter: Nunnenkamp, Jörg

(56) Entgegenhaltungen:
- EP-A1- 1 440 783
- WO-A1-2013/059555
- WO-A2-00/07816

## Beschreibung

Die Erfindung betrifft ein Verfahren zur Herstellung eines Kunststoff-Umreifungsbandes zum Umschlingen von einem oder mehreren Gegenständen mit folgenden Bestandteilen:
a) bis zu 90 Gew.-% Polyester und
b) bis zu 10 Gew.-% eines organischen Zusatzes aus der Gruppe der hochfesten Thermoplaste mit einem Elastizitätsmodul von mehr als 1000 N/mm²,
wonach die Bestandteile a) und b) miteinander gemischt und gemeinsam extrudiert sowie anschließend das entstehende Kunststoff-Umreifungsband oder Kunststoff-Umreifungsbandmaterial unter Berücksichtigung eines Streckgrades von 1 zu 2 bis 1 zu 5 gestreckt wird, und wonach der Hauptbestandteil Polyester und der Zusatz jeweils als Granulat gemeinsam extrudiert werden und ein Komposit bilden.

Umreifungsbänder aus Kunststoff werden zunehmend als Ersatz für Stahl-Umreifungsbänder eingesetzt. Der Grund hierfür ist der geringere Preis und auch die Tatsache, dass Kunststoff-Umreifungsbänder die zu umschlingenden Gegenstände nicht oder praktisch nicht bei der Umreifung beschädigen. Allerdings sind Kunststoff-Umreifungsbänder in ihrem Einsatzgebiet beschränkt.

Das lässt sich im Wesentlichen darauf zurückführen, dass Kunststoff-Umreifungsbänder zwar hohe Festigkeiten erreichen, allerdings die Temperaturbeständigkeit zu wünschen übrig lässt. Tatsächlich werden oftmals mithilfe solcher Umreifungsbänder noch heiße oder warme Metallbandcoils umschlungen, was typischerweise mit Kunststoff-Umreifungsbändern bisher nicht möglich ist.

Im Rahmen der DE 1 529 995 wird ein Spannband hoher Zugfestigkeit vorgestellt, welches aus einem homogenen, extrudierten sowie axial orientierten polymeren Material besteht. Die Frage der Temperaturbeständigkeit wird nicht aufgeworfen.

Darüber hinaus kennt man Kunststoff-Umreifungsbänder, die direkt durch Extrusion hergestellt werden, wie dies beispielsweise in der WO 03/087200 A1 beschrieben wird. An dieser Stelle wird darüber hinaus ein Kunststoff-Umreifungsband vorgestellt, welches sich im Wesentlichen aus Polyester und einem chemisch nicht modifizierten Polyolefin zusammensetzt. Dadurch soll die auf diese Weise hergestellte Umreifung mit einer erhöhten Festigkeit gegen ein Aufspalten in der Längsrichtung ausgerüstet werden.

Der zuvor beschriebene Effekt der Verhinderung eines Aufspleißens wird jedoch mit dem Nachteil erkauft, dass die Temperaturstabilität des bekannten Kunststoff-Umreifungsbandes zusätzlich gelitten hat. Das lässt sich im Kern auf die Beimischung von Polyolefinen und beispielsweise von Polypropylen zu dem Hauptbestandteil Polyester zurückführen. Denn der Schmelzpunkt von Polyester ist im Bereich von circa 270°C angesiedelt. Dahingegen werden für Polypropylen Schmelztemperaturen von ca. 130°C beobachtet. Dadurch kann das bekannte Kunststoff-Umreifungsband beispielsweise nicht zum Umschlingen von Gegenständen eingesetzt werden, die beim Umschlingungsvorgang eine Temperatur im zuvor angegebenen Bereich aufweisen.

Vor einem vergleichbaren Problem steht auch das Umreifungsband, welches durch die JP 11-245290 A bekannt geworden ist. Denn an dieser Stelle wird für das Umreifungsband auf Rohmaterial zurückgegriffen, welches Polyester zu 60 Gew.-% oder mehr enthält. Zusätzlich werden Elastomere wie beispielsweise Polyolefine zugegeben. Jedenfalls beobachtet man eine unter Umständen nicht ausreichende Temperaturstabilität für bestimmte Anwendungen.

Bei einem Verfahren entsprechend der DE 10 2012 102 155 A1 wird so vorgegangen, dass das Kunststoff-Umreifungsband neben Polyester den fraglichen Zusatz als Fasermaterial aufweist. Bei dem Fasermaterial kann es sich auch um Chemiefasern handeln, wobei unter anderem auch Polyamidfasern angesprochen werden. Abgesehen davon, dass die in den Kunststoff eingebetteten Fasern nicht zu einem homogenen Ausgangsprodukt führen, kann letztlich nicht ausgeschlossen werden, dass zusätzlich störende Fremdbestandteile eingeschlossen werden, die insgesamt die Festigkeit herabsetzen.

Ein gattungsgemäßes Verfahren wird in der WO 2013/059 555 A1 beschrieben. Hier geht es um ein Kunststoff-Umreifungsband, welches zwischen 85,5 und 99,9 Gew.-% Polyester sowie zwischen 0,15 und 4,5 Gew.-% eines Polyolefins aufweist. An dieser Stelle kann als Zusatz auch Polyamid zum Einsatz kommen. Insgesamt soll hierdurch die Neigung zum Aufspleißen verringert und die Farbe des eingesetzten Polyesters beibehalten werden.

Aus den zuvor geschilderten Gründen versucht man in der Praxis, den Anteil an Polyester für solche Kunststoff-Umreifungsbänder möglichst hoch einzustellen. Denn Polyester verfügt einerseits über die für die Umreifung notwendige Festigkeit und andererseits eine gewisse Temperaturstabilität. Der überwiegende Einsatz von Polyester ist jedoch mit dem Nachteil verbunden, dass Polyester von den Beschaffungskosten her relativ teuer ist. Aus diesem Grund besteht ein Bedürfnis danach, die Gesamtkosten insgesamt zu senken, ohne die mechanischen und Temperatureigenschaften signifikant zu verschlechtern. Hier setzt die Erfindung ein.

Der Erfindung liegt das technische Problem zu Grunde, ein Verfahren zur Herstellung eines Kunststoff-Umreifungsbandes zur Verfügung zu stellen, welches kostengünstig hergestellt werden kann und über die erforderliche mechanische Stabilität und Temperaturstabilität verfügt.

Zur Lösung dieser technischen Problemstellung ist ein gattungsgemäßes Verfahren zur Herstellung eines Kunststoff-Umreifungsbandes zum Umschlingen von einem oder mehreren Gegenständen dadurch gekennzeichnet, dass die im Extruder befindliche Schmelze aus Polyester und dem Zusatz entgast wird und das Kunststoff-Umreifungsband oder das Kunststoff-Umreifungsbandmaterial nach dem Strecken an einer Bandoberfläche gepägt wird.

Durch diese Vorgehensweise wird ein Kunststoff-Umreifungsband zur Verfügung gestellt, welches im Vergleich zum Stand der Technik über eine deutlich gesteigerte Festigkeit verfügt. Hierfür sorgt zunächst einmal Polyester als Hauptbestandteil und der Zusatz, bei dem es sich um einen hochfesten Thermoplast handelt. Dieser hochfeste Thermoplast verfügt über einen Elastizitäts-Modul oberhalb von 1000 N/m².

Zur Messung des Elastizitäts-Moduls wird auf bekannte Zug-, Druck- und Biegeversuche nach DIN 53 457 sowie das Vorlesungsmanuskript der Universität Stuttgart zum Thema "Werkstoffe im Bauwesen I; Kunststoffe" von Dipl.-Ing. Frauke Beckert in der Auflage vom Sommersemester 2000 verwiesen. Die jeweils angegebenen Werte werden bei einer Prüftemperatur von 20°C (Raumtemperatur) sowie den weiteren Prüfbedingungen gemäß DIN 53 455 ermittelt.

Durch die Mischung der beiden Komponenten, d.h. Polyester als Hauptbestandteil und dem hochfesten Thermoplast als Zusatz in jeweils Granulatform wird ein homogenes Ausgangsprodukt als Komposit zur Verfügung gestellt. Zusätzlich schlägt die Erfindung vor, dass die im Extruder befindliche Schmelze vorteilhaft entgast wird. Hierbei geht die Erfindung von der Erkenntnis aus, dass die Schmelztemperatur von Polyester in Verbindung mit dem hochfesten Thermoplast als Zusatz typischerweise bei ca. 200°C und mehr angesiedelt ist. Bei diesen Temperaturen ist damit zu rechnen, dass nicht nur etwaige Feuchtigkeit entweicht, sondern die Schmelze ist auch in der Lage, weitere flüchtige Bestandteile in die gasförmige Form zu überführen und aus der Schmelze zu entfernen.

Tatsächlich wird in diesem Zusammenhang der eingesetzte Hauptbestandteil Polyester oftmals nicht in reiner Form eingesetzt, sondern als Rezyklat. Ein solches Polyester-Rezyklat weist einen mehr oder minder großen Anteil an Fremdstoffen auf. Die Fremdstoffe können die Materialeigenschaften des hiermit hergestellten Kunststoff-Umreifungsbandes negativ beeinflussen. Das gilt insbesondere für die Festigkeit eines daraus hergestellten Umreifungsbandes.

Durch die gemeinsame Extrusion des Hauptbestandteils Polyester bzw. des Polyester-Rezyklates und des Zusatzes bzw. des hochfesten Thermoplastes als jeweils Granulat und die Bildung des Komposits wird dennoch ein Endprodukt zur Verfügung gestellt, welches hinsichtlich seiner Festigkeit einem Umreifungsband entspricht, das aus jeweils reinen Ausgangsmaterialien hergestellt worden ist. Hierfür sorgt vorzugsweise der vorgeschaltete Schritt der Entgasung bei der Schmelze und der Einsatz von jeweils Granulat und die Bildung des Komposits.

Bei den Bestandteilen a) und b) des erfindungsgemäßen Kunststoff-Umreifungsbandes handelt es sich um die Hauptbestandteile, zu denen vorteilhaft als weitere Komponente bis zu ca. 5 Gew.-% und insbesondere bis zu ca. 2 Gew.-% Polyolefin hinzutreten kann. Außerdem mögen noch weitere Bestandteile, wie unter Umständen nicht vermeidbare Verschmutzungen hinzutreten, die jedoch in der Summe nicht mehr als 1 Gew.-% des fraglichen Kunststoff-Umreifungsbandes im trockenen Zustand ausmachen.

Die Summe der Einzelbestandteile beträgt dabei in sämtlichen Fällen jeweils 100 Gew.-%.

Die Angabe "ca." bei den Gewichtsbestandteilen drückt aus, dass die Bestimmung der einzelnen Bestandteile typischerweise mit Hilfe der dynamischen Differential-Kalorimetrie (differential scanning calorimetry - DSC) erfolgt. Zum vorgenannten Verfahren, dessen Anwendung und Ausprägung wird auf das Lehrbuch "Differential Scanning Calorimetry: An Introduction for Practitioners" der Autoren Höhne, Hemminger und Flammersheim (Springer-Verlag Berlin, 1996) ausdrücklich Bezug genommen. Jedenfalls ist die dynamische Differenz-Kalorimetriemessung mit systembedingten Unsicherheiten bei der Bestimmung des jeweiligen Gewichtsanteiles verbunden, die durch das "ca." zum Ausdruck kommen.

Das erfindungsgemäße Kunststoff-Umreifungsband kann regelmäßig als Einzelstreifen unmittelbar extrudiert werden. Grundsätzlich ist es aber auch möglich, das erfindungsgemäße Kunststoff-Umreifungsband durch Längsschneiden einer Folie herzustellen, wie dies beispielhaft und nicht einschränkend in der GB 1 132 060 beschrieben wird. In beiden Fällen handelt es sich bei dem erfindungsgemäßen Kunststoff-Umreifungsband um ein Einzelstreifenband. Dieses Einzelstreifenband verfügt typischerweise über eine Breite bzw. Materialbreite von 2 mm bis 40 mm und vorzugsweise von 5 mm bis 40 mm. Außerdem wird eine Materialstärke bzw. Materialdicke im Bereich von 0,1 mm bis 3 mm und vorzugsweise von 0,3 mm bis 2 mm beobachtet.

Bei dem Zusatz, der zu bis zu 10 Gew.-% bzw. bis zu 20 Gew.-% dem Hauptbestandteil von bis zu ca. 90 Gew.-% bzw. bis zu 80 Gew.-% Polyester beigemischt wird, wobei der Hauptbestandteil Polyester und der Zusatz gemeinsam extrudiert werden und praktisch ein Komposit bilden, handelt es sich um einen organischen Zusatz. Tatsächlich verfügt dieser Zusatz regelmäßig über ein Elastizitätsmodul von mehr als 1.500 N/mm².

Aufgrund dieser Einschränkungen hinsichtlich des Elastizitätsmoduls kommen als Zusätze nur solche mit hoher Festigkeit in Frage. Der Elastizitätsmodul beschreibt allgemein den Zusammenhang zwischen Spannung und Dehnung bei der Verformung eines festen Körpers aus dem betreffenden Material und bei linear elastischem Verhalten. Je höher der Betrag des Elastizitätsmoduls ist, umso größer ist der Widerstand, den das betreffende Material seiner elastischen Verformung entgegensetzt. Insofern fungiert der Elastizitätsmodul erfindungsgemäß als Kriterium für die Festigkeit des eingesetzten Materials. Es handelt sich folglich um einen Materialkennwert, welcher auch zur Klassifizierung und Beschreibung von Kunststoffen eingesetzt wird.

Tatsächlich kommt erfindungsgemäß als organischer Zusatz ein solcher aus der Gruppe der hochfesten Thermoplaste zum Einsatz. Denn Thermoplaste bzw. thermoplastische Kunststoffe sind aus wenig oder nicht verzweigten, also linearen Kohlenstoffketten aufgebaut, die darüber hinaus eine schwache physikalische Bindung miteinander aufweisen. Als Folge hiervon verfügen solche Kunststoffe zumindest angenähert über ein elastisches Verhalten einerseits und ein hohes Elastizitätsmodul andererseits und sind damit für den erfindungsgemäßen Einsatz prädestiniert.

Hinzu kommt, dass solche Thermoplaste durch Schweißen miteinander verbunden werden können, so dass sie für den Einsatz im Zusammenhang mit einem Kunststoff-Umreifungsband besonders geeignet sind. Denn die erfindungsgemäßen Kunststoff-Umreifungsbänder werden mit ihren Enden nach dem Umschlingungsvorgang regelmäßig miteinander verschweißt, beispielsweise durch ein Reibschweißen.

Als denkbare und besonders bevorzugte Thermoplaste haben sich in diesem Zusammenhang hochfeste Thermoplaste wie beispielsweise Polyamid (PA), Polybutylenterephthalat (PBT), Zelluloseacetat (CA), Polymethylmethacrylat (PMMA), Polystyrol (PS), Polyvinylchlorid (PVC) etc. als besonders günstig erwiesen. Beispielsweise verfügt das am meisten bevorzugte Polyamid bzw. PA über einen Zug-E-modul von 2.300 N/mm². Die Schmelztemperatur von Polyamiden liegt darüber hinaus typischerweise bei nahezu 200 °C, in vielen Fällen sogar deutlich darüber. Als Folge hiervon nähert sich der Schmelzpunkt des Zusatzes in diesem Fall demjenigen von Polyester als Hauptbestandteil an, welcher im Bereich von ca. 270 °C angesiedelt ist. Jedenfalls liegt der Schmelzpunkt des Zusatzes bzw. der hochfesten Thermoplaste regelmäßig deutlich oberhalb der im Stand der Technik eingesetzten Polyolefine, die beispielsweise bei Polypropylen Schmelztemperaturen von lediglich ca. 130 °C besitzen.

Auch der weitere besonders bevorzugte Zusatz in Gestalt von Polybutylenterephthalat (PBT) verfügt über ein Elastizitätsmodul im Bereich von 1.700 bis 2.700 N/mm² und liegt damit deutlich über der erfindungsgemäß geforderten Grenze von 1.000 N/mm² und bevorzugt von 1.500 N/mm². Auch der Schmelzpunkt von Polybutylenterephthalat nähert sich mit ca. 220 °C demjenigen von Polyester. D.h., die zuvor beispielhaft beschriebenen organischen Zusätze in Gestalt der hochfesten Thermoplaste sind für den beschriebenen Einsatzzweck besonders geeignet. Denn die fraglichen Thermoplaste verfügen über die nötige Festigkeit einerseits und zugleich über die geforderte hohe Temperaturstabilität andererseits. Tatsächlich sind die Eigenschaften vergleichbar mit denjenigen des Hauptbestandteils Polyester, welches im Allgemeinen einen Elastizitätsmodul von 2.000 N/mm² aufweist.

Ergänzend zu dem zuvor beschriebenen organischen Zusatz kann auch mit einem anorganischen Zusatz unter Berücksichtigung eines gesamten Anteils von bis zu ca. 20 Gew.-% und vorzugsweise von bis zu ca. 10 Gew.-% als Ausgangsmaterial für die Herstellung des Kunststoff-Umreifungsbandes gearbeitet werden.

Bei den anorganischen Zusätzen handelt es sich typischerweise um anorganische nichtmetallische Zusätze, wie beispielsweise Glas oder Keramik.

Solche anorganischen nichtmetallischen Zusätze verfügen typischerweise über sehr hohe Schmelztemperaturen, die deutlich über derjenigen des Hauptbestandteils Polyester liegen. Hinzukommt, dass diese anorganischen nichtmetallischen Zusätze im Regelfall mit einem Elastizitätsmodul ausgerüstet sind, welches bei einigen 10 bis einigen 100 kN/mm² angesiedelt ist, also den erfindungsgemäß geforderten Elastizitätsmodul von 1.000 N/mm² entsprechend 1 kN/mm² deutlich, meistens um das Zehnfache bis Hundertfache, übertreffen. Allerdings können solche anorganische nichtmetallische Zusätze nur in begrenztem Umfang zusammen mit Polyester koextrudiert werden, weil das Kunststoff-Umreifungsband bei einem zu hohen Anteil bzw. des betreffenden Zusatzes zum Bruch bzw. zum Aufspleißen neigt. Dem kann erfindungsgemäß durch den weiteren und optionalen Zusatz bzw. die weitere Komponente von bis zu 5 Gew.-% Polyolefin begegnet werden.

Tatsächlich ist es beispielsweise durch die einleitend bereits in Bezug genommene EP 1 501 885 B1 bekannt, dass der Zusatz und Einsatz von Polyolefinen, wie beispielsweise Polypropylen, bei der Herstellung von Kunststoff-Umreifungsbändern mit dem Hauptbestandteil Polyester die Neigung zum Aufspleißen verringert. Das wird im Kern darauf zurückgeführt, dass das zusätzlich eingebrachte Polyolefin mit dem angegebenen Gewichtsanteil von bis zu 5 Gew.-% die Polymerketten des hauptsächlich (bis zu 80 bzw. 90 Gew.-%) eingesetzten Polyesters miteinander (quer) verbindet.

Folgerichtig liegt es im Rahmen der Erfindung, bei dem Zusatz zu dem Hauptbestandteil Polyester sowohl auf den organischen Zusatz aus der Gruppe der hochfesten Thermoplaste als auch auf den anorganischen nichtmetallischen Zusatz wie beispielsweise Glas, Keramik in Kombination zurückzugreifen. Dabei sollte der Anteil dieses Zusatzes vorteilhaft bis zu ca. 10 Gew.-% am Ausgangsmaterial betragen. Der Anteil an Polyester am Ausgangsmaterial liegt bei ca. 90 Gew.-% in vorteilhafter Ausgestaltung. Außerdem mag noch ein Zusatz von bis zu ca. 5 Gew.-% und insbesondere bis zu ca. 2 Gew.-% Polyolefinen vorliegen. Folgerichtig sind Zusammensetzungen mit beispielsweise 85 Gew.-% Polyester, 10 Gew.-% anorganischem/organischem Zusatz und 5 Gew.-% Polyolefinen denkbar.

Anschließend an die gemeinsame Extrusion der fraglichen Bestandteile wird das entstehende Kunststoff-Umreifungsband gestreckt. Alternativ hierzu ist es aber auch möglich, dass aus dem Ausgangsmaterial nach der Extrusion ein Kunststoff-Umreifungsbandmaterial hergestellt und dieses dann gestreckt wird. Dabei wird erfindungsgemäß mit einem Streckgrad von 1 zu 2 bis 1 zu 5 und insbes. von 1 zu 4 gearbeitet. Auch findet ein abschließendes Prägen der Bandoberfläche statt. Sofern Kunststoff-Umreifungsbandmaterial zum Einsatz kommt bzw. extrudiert wird, mag sich abschließend noch ein Vorgang anschließen, mit dessen Hilfe das Kunststoff-Umreifungsbandmaterial in Längsstreifen geschnitten wird, damit die gewünschten Einzelstreifen zur Verfügung stehen.

Für die Extrusion greift die Erfindung vorteilhaft auf einen sogenannten Doppelextruder bzw. Doppelschneckenextruder zurück. Solche Extruder sind seit langem bekannt. Hierzu sei beispielhaft auf die DE 38 41 729 C1 verwiesen, welche sich mit einem Doppelschneckenextruder zum Entgasen von thermoplastischen Kunststoffschmelzen befasst. Mit Hilfe der Entgasung können beispielsweise Lösungsmittel, Feuchtigkeit oder allgemein Fremdstoffe aus der Schmelze bzw. dem Extrudat entfernt werden, so lange diese bei den im Innern des Extruders herrschenden Temperaturen (meistens 200°C oder mehr) in gasförmiger Form vorliegen und abgesaugt werden können.

Dadurch kann die im Extruder befindliche Schmelze aus Polyester und dem Zusatz besonders einfach entgast werden. Denn solche Doppelschneckenextruder bzw. Doppelextruder verfügen regelmäßig über wenigstens eine drucklose Zone, in welcher die betreffende Entgasung der Schmelze möglich ist.

In diesem Zusammenhang kommt es besonders darauf an, unterhalb der Schmelztemperatur flüchtige Bestandteile aus der Schmelze zu entfernen. Da die Schmelztemperatur bzw. die Temperatur der Schmelze im Innern des Extruders bzw. Doppelextruders im Allgemeinen bei ca. 200°C und mehr angesiedelt ist, werden auf diese Weise sämtliche im geschmolzenen Material befindlichen Stoffe herausgelöst, die bei dieser Temperatur in gasförmiger Form vorliegen und über die Entgasung abgesaugt werden können.

Auf diese Weise setzt sich die Schmelze im Extruder bzw. Doppelextruder erfindungsgemäß nahezu ausschließlich aus den bis zu ca. 90 Gew.-% Polyester und ca. 10 Gew.-% des Zusatzes sowie ggf. der bis zu 5 Gew.-% Polyolefin zusammen. Außerdem ist die Auslegung so getroffen, dass der Anteil an Polyester mehr als 50 Gew.-% beträgt und derjenige des Zusatzes sowie des Polyolefins jeweils mehr als 1 Gew.-%. Das führt im Ergebnis dazu, dass die Homogenität des solchermaßen extrudierten Kunststoff-Umreifungsbandes gesteigert ist und etwaige Einschlüsse, Verunreinigungen etc. nicht beobachtet werden. Dadurch steigt die mechanische Festigkeit des erfindungsgemäßen Kunststoff-Umreifungsbandes und wird insbesondere ein Aufspleißen verhindert. Dieser Tendenz wirkt darüber hinaus der Anteil an bis zu 5 Gew.-% Polyolefin entgegen, wie dies zuvor bereits beschrieben worden ist.

Das alles gelingt unter Berücksichtigung reduzierter Herstellungskosten im Vergleich zum Stand der Technik. Denn die Substitution von Polyester durch den Zusatz, insbesondere durch Polyamid oder Polybutylenterephthalat, reduziert die Kosten des verwendeten Granulats. Hinzu kommt, dass erfindungsgemäß Recyclingmaterial eingesetzt werden kann, um auf diese Weise für den optionalen Zusatz an den Polyolefinen und auch die Zufuhr des Hauptbestandteiles an Polyester zu sorgen. Tatsächlich stammt dieses Recyclingmaterial überwiegend von PET-Flaschen, die zu sogenannten PET-Flakes verarbeitet werden können. Dies wird prinzipiell in der US 4 830 188 beschrieben.

Solche PET-Flakes setzen sich typischerweise aus überwiegend Polyester und teilweise einem oder mehreren Polyolefinen zusammen. Im Rahmen der Erfindung können nun solche PET-Flakes vorteilhaft zur Herstellung des beschriebenen Kunststoff-Umreifungsbandes eingesetzt werden. D.h., der Anteil an bis zu ca. 90 Gew.-% Polyester und ggf. bis zu 5 Gew.-% Polyolefin wird zumindest teilweise von dem betreffenden Recyclingmaterial gespeist. Je nach Ausgangszusammensetzung der in diesem Zusammensetzung eingesetzten PET-Flakes sind dann noch Zusätze zu berücksichtigen, insbes. von Polyester als Granulat sowie des weiteren Zusatzes, beispielsweise Polyamid, Polybutylenterephthalat usw.

Durch die beschriebene Entgasung werden aus den als Rohmaterial eingesetzten PET-Flakes die leichtflüchtigen Bestandteile entfernt, welche die Festigkeit des solchermaßen hergestellten Kunststoff-Umreifungsbandes reduzieren und/oder ein Aufspleißen begünstigen. Zugleich sorgen die in den PET-Flakes vorhandenen Polyolefine dafür, dass die Polymerketten des Polyesters miteinander (quer) verbunden werden, so dass insgesamt die Festigkeit erhöht wird und ein Aufspleißen nicht beobachtet wird. Das gilt auch und insbesondere dann, wenn die fraglichen Polymerketten des Polyesters in gleichsam eine Matrix aus dem bis zu 20 gew.-%igen Zusatz eingebettet sind. Hierin sind die wesentlichen Vorteile zu sehen.

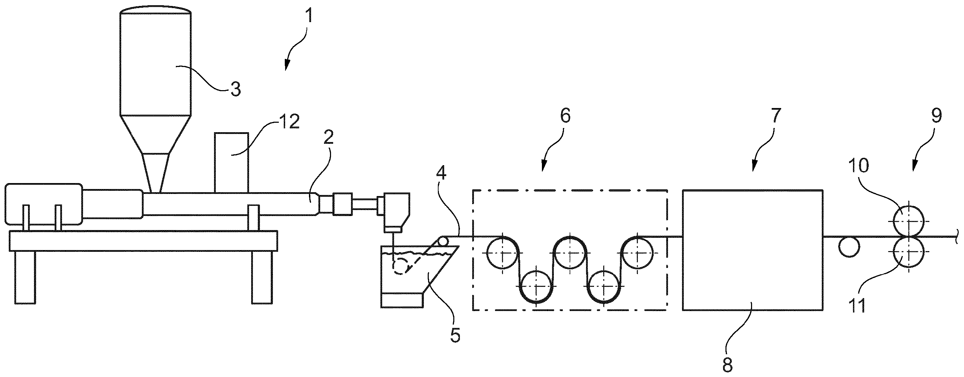

Im Folgenden wird eine Anlage zur Herstellung des erfindungsgemäßen Kunststoff-Umreifungsbandes näher erläutert. Die einzige Figur zeigt eine Vorrichtung zur Herstellung eines Kunststoff-Umreifungsbandes zum Umschlingen von einem oder mehreren Gegenständen nach der Erfindung.

Man erkennt in der Figur zunächst einmal eine Extrusionsvorrichtung 1, welche vorliegend mit zwei Extruderschnecken 2 und einem Extruderbehälter 3 ausgerüstet ist. Tatsächlich handelt es sich bei der Extrusionsvorrichtung 1 um einen Doppelschneckenextruder. In dem Extruderbehälter 3 werden die Rohstoffe zur Herstellung des Kunststoff-Umreifungsbandes 4 ausgangsseitig der Extruderschnecke 2 bevorratet. Außerdem werden die Rohstoffe aus dem Extruderbehälter 3 der Extruderschnecke bzw. Doppelextruderschnecke 2 zugeführt. Der Extruderbehälter 3 enthält folglich das Extrudat.

Darüber hinaus erkennt man noch eine Entgasungsöffnung in Verbindung mit einer Entgasungsvorrichtung 12. Die Entgasungsöffnung ist in dem Bereich der Doppelextruderschnecke 2 vorgesehen, in welchem die überwiegend drucklose Schmelze, wie beschrieben, entgast wird. Dazu kann beispielsweise eine an dieser Stelle angeflanschte Unterdruckpumpe vorgesehen werden. Außerdem ist die Entgasungsvorrichtung 12 stromab des Extruderbehälters 3 angeordnet.

Nach der Extrusion des Kunststoff-Umreifungsbandes 4 ausgangsseitig der Doppelextruderschnecke 2 durchläuft dieses zunächst ein Wasserbad 5. Im Anschluss an das Wasserbad 5 sind eine erste Streckeinrichtung 6 und eine zweite Streckeinrichtung 7 vorgesehen. Die zweite Streckeinrichtung 7 ist darüber hinaus mit einem Ofen 8 ausgerüstet, durch welchen das Kunststoff-Umreifungsband 4 beim zweiten Streckvorgang geführt wird. Für die Verstreckung gilt, dass das die Doppelextruderschnecke 2 verlassende Kunststoff-Umreifungsband 4 unter Berücksichtigung eines Streckgrades von 1 zu 2 bis 1 zu 5 gestreckt wird. D h., dass das die Extruderschnecke 2 verlassende Kunststoff-Umreifungsband 4 wird auf das Doppelte bis zur fünffachen Länge in der ersten bzw. zweiten Streckeinrichtung 6, 7 verstreckt.

Der Ofen 8 bei der zweiten Streckeinrichtung 7 sorgt dafür, dass die beim Strecken erreichte molekulare Orientierung der Polymerketten im Material unverändert bleibt und sich nach Beendigung des Streckvorganges nicht auflöst. Im Anschluss an die beiden Streckvorrichtungen 6, 7 wird dann das Kunststoff-Umreifungsband 4 noch geprägt. Hierzu ist eine Prägevorrichtung 9 vorgesehen, die mit einer Prägewalze 10 und einer mit der Prägewalze 10 wechselwirkenden Gegenwalze bzw. Gegendruckwalze 11 ausgerüstet ist.

Mit Hilfe der dargestellten Vorrichtung wird das Kunststoff-Umreifungsband 4 direkt hergestellt, verlässt also als Einzelstreifen den Doppelschneckenextruder 2. Dabei verfügt das Kunststoff-Umreifungsband 4 über eine Breite von ca. 5 mm bis 40 mm. Die Materialstärke beträgt 0,1 m bis 3 mm.

## Patentansprüche

1. Verfahren zur Herstellung eines Kunststoff-Umreifungsbandes (4) zum Umschlingen von einem oder mehreren Gegenständen mit folgenden Bestandteilen:
a) bis zu ca. 90 Gew.-% Polyester und
b) bis zu ca. 10 Gew.-% eines organischen Zusatzes aus der Gruppe der hochfesten Thermoplaste mit einem Elastizitätsmodul von mehr als 1.000 N/mm²,
wonach die Bestandteile a) und b) miteinander gemischt und gemeinsam extrudiert sowie anschließend das entstehende Kunststoff-Umreifungsband (4) oder Kunststoff-Umreifungsbandmaterial unter Berücksichtigung eines Streckgrades von 1 zu 2 bis 1 zu 5 gestreckt wird, und wonach
der Hauptbestandteil Polyester und der Zusatz jeweils als Granulat gemeinsam extrudiert werden und ein Komposit bilden,
**dadurch gekennzeichnet, dass**
- die im Extruder befindliche Schmelze aus Polyester und dem Zusatz entgast wird und
- das Kunststoff-Umreifungsband (4) oder das Kunststoff-Umreifungsbandmaterial nach dem Strecken an einer Bandoberfläche geprägt wird.

2. Verfahren nach Anspruch 1, **dadurch gekennzeichnet, dass** der Zusatz nach b) einen Elastizitätsmodul von mehr als 1.500 N/mm² aufweist.

3. Verfahren nach Anspruch 1 oder 2, **dadurch gekennzeichnet, dass** als weitere Komponente
c) bis zu 5 Gew.-% Polyolefin
vorgesehen ist.

4. Verfahren nach einem der Ansprüche 1 bis 3, **dadurch gekennzeichnet, dass** der Anteil des Polyesters nach a) bis zu ca. 80 Gew.-% beträgt.

5. Verfahren nach einem der Ansprüche 1 bis 4, **dadurch gekennzeichnet, dass** der Anteil des Zusatzes nach b) bis zu ca. 20 Gew.-% beträgt.

6. Verfahren nach einem der Ansprüche 1 bis 5, **dadurch gekennzeichnet, dass** die Schmelze in einem Doppelschneckenextruder (2) entgast wird.

7. Verfahren nach einem der Ansprüche 1 bis 6, **dadurch gekennzeichnet, dass** als Polyester ein Polyester-Rezyklat eingesetzt wird.

## Claims

1. A method for producing a plastic strap (4) for wrapping around one or more objects with the following ingredients:
a) up to approximately 90% by weight polyester and
b) up to approximately 10% by weight of an organic additive from the group of high-strength thermosetting plastics with a modulus of elasticity of more than 1000 N/mm²,
wherein the ingredients a) and b) are mixed together and extruded jointly, and then the resulting plastic strap (4) or plastic strapping material is drawn, taking into account a degree of drawing of 1:2 to 1:5, and wherein
polyester, the main ingredient, and the additive are each extruded jointly as granules and they form a composite,
**characterized in that**
- the melt of polyester and the additive in the extruder is degassed, and
- the plastic strap (4) or the plastic strapping material is embossed on the surface of the strap after drawing.

2. The method according to claim 1, **characterized in that** the additive according to b) has a modulus of elasticity of more than 1500 N/mm².

3. The method according to claim 1 or 2, **characterized in that**
c) up to 5% by weight polyolefin
is provided as an additional ingredient.

4. The method according to any one of claims 1 to 3, **characterized in that** the amount of polyester according to a) is up to approximately 80% by weight.

5. The method according to any one of claims 1 to 4, **characterized in that** the amount of the additive according to b) is up to approximately 20% by weight.

6. The method according to any one of claims 1 to 5, **characterized in that** the melt is degassed in a twinscrew extruder (2).

7. The method according to any one of claims 1 to 6, **characterized in that** a recycled polyester material is used as the polyester.

## Revendications

1. Procédé de fabrication d'une bande de cerclage en matière plastique 4) destinée à entourer un ou plusieurs objets, comportant les éléments suivants :
a) jusqu'à env. 90 % en poids de polyester et
b) jusqu'à env. 10 % en poids d'un additif organique, choisi dans les groupe des matières thermoplastiques ultrarésistantes, présentant un module d'électricité supérieur à 1.000 N/mm²,
selon lequel on mélange l'un à l'autre les éléments a) et b) et on les extrude en commun, ainsi que par la suite, on étire la bande de cerclage en matière plastique (4) ou la matière de bande de cerclage en matière plastique obtenue, en tenant compte d'un degré d'étirement de 1 à 2 jusqu'à 1 à 5 et selon lequel
on extrude en commun l'élément principal polyester et l'additif, chacun sous la forme de granulés et ils forment un composite,
**caractérisé en ce**
- **qu'**on dégaze la masse fondue de polyester et d'additif se trouvant dans l'extrudeuse et
- **qu'**après l'étirage, on gaufre la bande de cerclage en matière plastique (4) ou la matière de bande de cerclage en matière plastique sur une surface de bande.

2. Procédé selon la revendication 1, **caractérisé en ce que** der l'additif selon b) présente un modulé d'élasticité supérieur à 1.500 N/mm².

3. Procédé selon la revendication 1 ou 2, **caractérisé en ce qu'**il est prévu en tant que composant supplémentaire
c) jusqu'à 5 % en poids de polyoléfine.

4. Procédé selon l'une quelconque des revendications 1 à 3, **caractérisé en ce que** la part en polyester selon a) s'élève à jusqu'à env. 80 % en poids.

5. Procédé selon l'une quelconque des revendications 1 à 4, **caractérisé en ce que** la part de l'additif selon b) s'élève à jusqu'à env. 20 % en poids.

6. Procédé selon l'une quelconque des revendications 1 à 5, **caractérisé en ce qu'**on dégaze la masse fondue dans une extrudeuse à double vis (2).

7. Procédé selon l'une quelconque des revendications 1 à 6, **caractérisé en ce qu'**on met en oeuvre en tant que polyester un polyester recyclé.
